# EUROPEAN PATENT SPECIFICATION

(11) **EP 1 031 497 B1**
(45) Date of publication and mention of the grant of the patent: **22.10.2008**
(21) Application number: 00850025.8
(22) Date of filing: 09.02.2000
(51) Int. Cl.: B62D 35/00

(54) **Adjustment device for an air deflector**
Verstellvorrichtung fur Windabweiser
Dispositif d'ajustement pour déflecteur aérodynamique

(30) Priority: 26.02.1999 SE 9900697
(43) Date of publication of application: 30.08.2000
(73) Proprietor: VOLVO LASTVAGNAR AB, 405 08 Göteborg (SE)
(72) Inventor: Ragndahl, Göran, 442 37 Kungälv (SE); Hackman, Göran, 653 46 Karlstad (SE)
(74) Representative: Fröhling, Werner Otto

(56) References cited:
- EP-A- 0 882 642
- FR-A- 2 497 753
- GB-A- 2 098 152
- GB-A- 2 128 950

## Description

The present invention relates to an adjusting device for an air deflector according to the preamble of claim 1.

Air deflectors are arranged on the roofs of vehicles such as lorries for the purpose of reducing the air resistance and thus the fuel consumption of the vehicle. Lorries include a haulage vehicle behind which a trailer can be articulated and thus pulled by the haulage vehicle. Alternatively, a structure forming a loading area can be arranged directly on the haulage vehicle. The word trailer as used herein below will also signify such a structure. The trailer is often higher than the haulage vehicle, which means that that part of the trailer extending above the haulage vehicle generates great air resistance, since this part often has a surface whose normal coincides with the direction of travel. By arranging the air deflector on top of the haulage vehicle roof in front of the said part of the trailer, the air resistance decreases. The air deflector preferably has an aerodynamic design which leads the wind over the top of and along the sides of the said part of the trailer.

A haulage vehicle is often adapted to pull trailers of different sizes and shapes. It must therefore be possible for the air deflector to be adjusted and adapted to the trailer so as to ensure as low as possible an air resistance for a specific trailer.

It is already known to provide an air deflector with an adjusting device which comprises an electrically powered ball screw which is operated from inside the cab of the haulage vehicle via a switch. The ball screw is connected at one end to the rear edge of the air deflector and its other end is connected to the roof of the haulage vehicle. Since the ball screw in the known adjusting device has a short stroke in relation to its total length, the range within which the air deflector can be adjusted is small. Ball screws are also expensive, which means that the total cost of the haulage vehicle increases. Since the adjusting device is placed on the haulage vehicle roof, the said adjusting device is exposed to water, dust, gritting salt and other substances which whirl up from the road surface. A ball screw is sensitive to these substances, for which reason its function is often compromised.

GB 2128950 discloses an adjustment device for an air deflector with a horizontally arranged screw actuator in accordance with the features of the preamble of claim 1.

A disadvantage w th this arrangement is that air pressure load on the air deflector may cause bending stress on the screw actuator.

GB 2098152 and FR 2497753 disclose adjustment devices coupled directly to the respective air deflector without a connecting rod between the adjusting device and the air deflector.

The object of the present invention is to make available an adjustment device for an air deflector, which permits a wide range of adjustment of the air deflector, so that the air deflector can thereby be adapted to a number of types of vehicles and trailers. Other objects of the invention are to provide an adjusting device for an air deflector, which has a low cost and low weight, which can deal with great forces and withstands aggressive environments, and which is easy to adjust.

This is achieved with an adjustment device of the type specified in the introduction, in which the shaft and the nut are arranged in a housing which, with a support, is connected to the vehicle roof. The shaft extends at an angle of between 20 - 50 degrees relative to the roof.

Since the nut can move along the whole length of the shaft, the angle of the air deflector relative to the vehicle roof can be adjusted within a wide range. The adjusting device according to the invention can be produced at low cost, since the components included in the adjusting device are of little complexity. This also means that the weight is low. The shaft and the nut are built into a housing such as a profile section, as a result of which they are not sensitive to the environments to which they will be exposed, for which reason the reliability of the adjusting device is high. The drive mechanism can be operated from the driver's cab of the vehicle, for which reason the adjusting device is easy to adjust. The range within which the angle of the air deflector relative to the vehicle roof can be adjusted is increased, since the shaft extends at an angle of between 20 and 50 degrees relative to the roof. This also means that the adjusting device is placed under the air deflector and is thereby protected from environmental impacts.

The invention will be explained in more detail below on the basis of illustrative embodiments which are shown in the attached drawings, in which:
Fig. 1 shows a perspective view of an adjusting device for an air deflector according to the present invention,
Fig. 2 shows a side view of the adjusting device in Fig. 1, with the air deflector in its uppermost position,
Fig. 3 shows a side view of the adjusting device in Fig. 1, with the air deflector in its lowermost position, and
Fig. 4 shows a cross section, along the line A-A in Fig. 2, through the shaft and nut of the adjusting device.

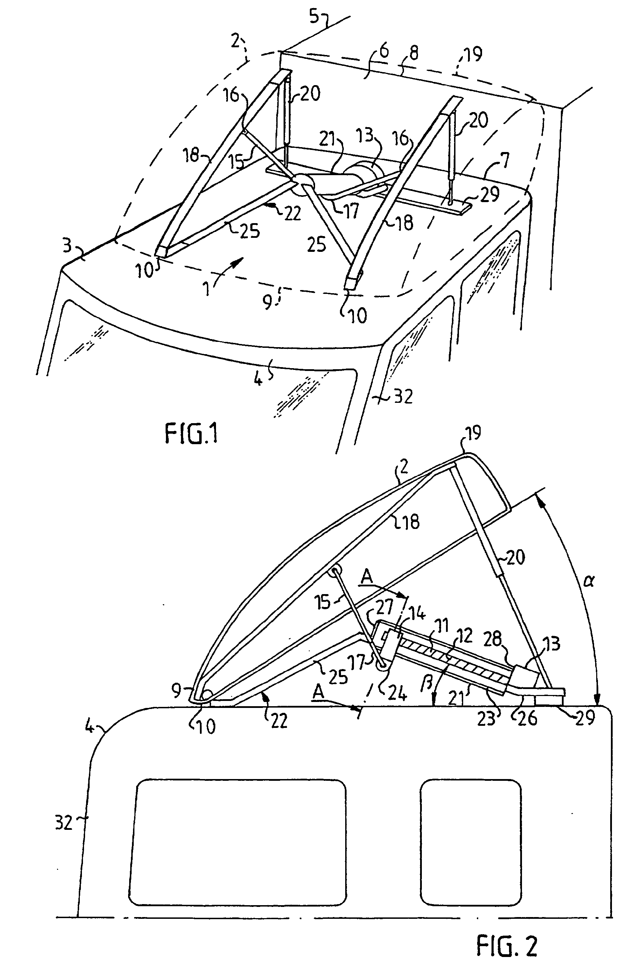

An adjusting device 1 for an air deflector 2 according to the present invention is shown in a perspective view in Fig. 1. The adjusting device 1 is arranged on the roof 3 of a haulage vehicle 4 to which a trailer 5 is coupled. The trailer 5 is higher than the haulage vehicle 4 and that part of the trailer 5 extending above the haulage vehicle 4 has a plane surface 6 whose normal essentially coincides with the direction of travel of the haulage vehicle and thus of the trailer 5. The air deflector 2 is designed in such a way that the oncoming wind is led over the top of and along the sides of the trailer 5, so that the vehicle's air resistance, i.e. the air resistance of the haulage vehicle 4 and of the trailer 5, decreases, resulting in lower fuel consumption.

If a trailer 5 which is higher or lower than the trailer 5 shown in Fig. 1 is coupled to the haulage vehicle 4, the roof spoiler 2 has to be adjusted in order to lead the oncoming wind over the top of and along the sides of the trailer 5. The air deflector 2 also has to be adjusted if the distance between the rear edge 7 of the roof 3 of the haulage vehicle 4 and the front edge 8 of the trailer 5 is changed. The front end 9 of the roof spoiler 2 is connected in an articulated manner to the roof 3 of the haulage vehicle 4 by way of hinges 10. During adjustment of the air deflector 2, the angle between the air deflector 2 and the roof 3 changes. This adjustment is made using the adjusting device 1 according to the invention, which device will be explained in more detail with reference to Fig. 2.

Fig. 2 shows a side view of the adjusting device 1, where the air deflector 2 has been set to its uppermost position. The adjusting device 1 comprises a shaft 11 which is provided with a screw thread 12. The shaft 11 is coupled to a drive mechanism 13 which permits rotation of the shaft 11 upon adjustment of the angle of the air deflector 2 relative to the vehicle roof 3 on which the air deflector 2 is arranged. A nut 14 arranged on the shaft 11 can move along the shaft 11 when the shaft 11 is rotating. At least one connecting rod 15 is joined in an articulated manner to the nut 14 and the air deflector 2. The connecting rod 15 transmits movement and power from the nut 14 to the air deflector 2 when the angle α of the air deflector 2 relative to the vehicle roof 3 is to be adjusted.

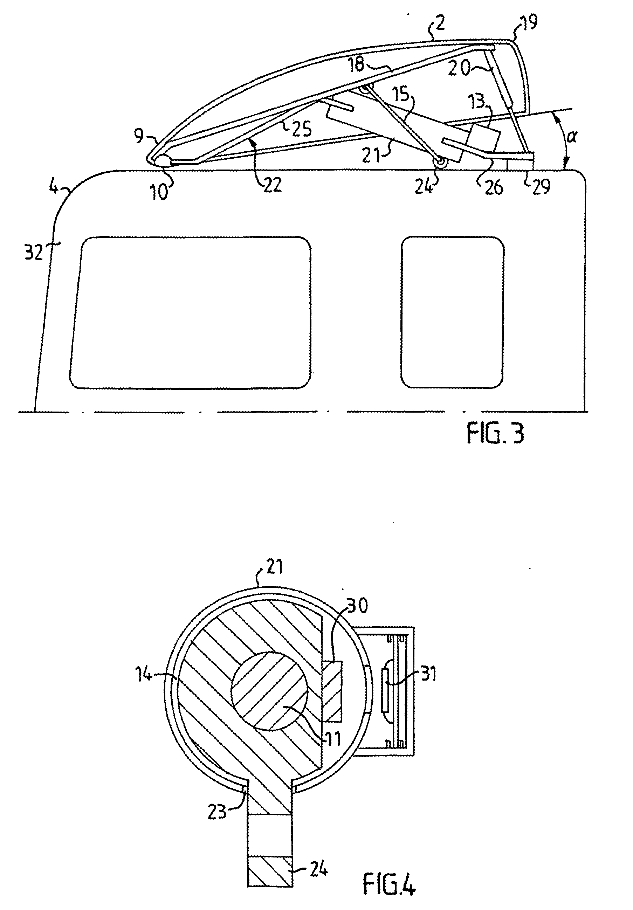

As is shown in Fig. 2, the shaft 11 extends at an angle β relative to the roof. The angle β is preferably situated in the range of 20 - 50 degrees. By arranging the shaft 11 at an angle β relative to the roof 3, so that the shaft 11 is inclined relative to the roof 3, a shaft 11 of considerable length can be used, in order thereby to obtain a wide range of adjustment of the air deflector 2. This adjustment range increases still further by means of the fact that the adjusting device engages between the front end 9 of the air deflector 2 and a rear area 19 of the air deflector 2. By means of the fact that the shaft 11 slopes in relation to the roof 3, the air deflector 2 in its lowermost position, as is shown in Fig. 3, comes very close to the vehicle roof 3 without coming into conflict with the shaft 11.

The connecting rod 15 is essentially V-shaped and via its outer ends 16 is joined in an articulated manner to the air deflector 2 and via a central area 17 is joined in an articulated manner to the nut 14. This can best be seen in Fig. 1. The air deflector 2 is preferably made of plastic or fibreglass. In order to increase the stability of the attachment of the adjusting device 1 to the air deflector 2, reinforcing rods 18 are arranged on the air deflector 2. As is shown in Fig. 1, two reinforcing rods 18 extend from the area where the hinges 10 are arranged to the rear area 19 of the air deflector 2. The connecting rod 15 is preferably joined in an articulated manner via its outer ends 16 to the reinforcing rod 18 of the air deflector 2, as is shown in the figures. Arranged between the roof 3 of the haulage vehicle 4 and the air deflector 2 there are two pneumatic springs 20. The pneumatic springs 20 take up force between the air deflector 2 and the roof 3 and contribute to damping the vibrations in the air deflector 2 which are generated by the wind and by irregularities in the road surface.

The shaft 11 and the nut 14 are arranged in a housing 21 which is connected to the roof 3 of the haulage vehicle 4 via a support 22. The housing 21 is shown in cross section in Fig. 2. A slot 23 is arranged in the housing 21, and a pin 24 on the nut 14 is intended to run through this slot 23 when the nut 14 moves along the shaft 11. The connecting rod 15 is articulated on the pin 24. The housing 21 is preferably made of an aluminium profile. The support 22 comprises a pair of front and rear legs 25, 26 which are connected to front and rear ends 27, 28 of the housing 21. The front legs 25 are connected to the vehicle roof 3 in an area where the hinges 10 of the air deflector 2 are arranged, and the rear legs 26 are connected to the roof 3 via a reinforcing beam 29 arranged on the roof.

Fig. 4 shows a cross section, along the line A-A in Fig. 2, through the shaft 11 and nut 14 of the adjusting device 1. A transmitter 30 is arranged on the nut 14 and a sensor 31 is arranged on the housing 21, which sensor 31 detects the position of the nut 14 on the shaft 11 and thus the position of the air deflector 2 relative to the vehicle 4. The sensor 30 is a permanent magnet arranged on the nut 14. The sensor 31 comprises a number of magnetic tongue elements which are arranged at predetermined distances along the longitudinal direction of the shaft 11.

The drive mechanism 13 is preferably an electric motor which is manoeuvred by means of a switch (not shown) from the driver's cab 32 of the haulage vehicle 4. The magnetic tongue elements are preferably coupled to an indicator panel (not shown) which is arranged in the driver's cab 32 and which provides the driver with information concerning the position of the air deflector 2.

## Claims

1. Adjusting device for an air deflector (2), comprising a shaft (11), which is provided with a screw thread (12), and a nut (14) arranged on the shaft (11), wherein the shaft (11) is coupled to a drive mechanism (13) which permits rotation of the shaft (11) when adjusting the angle (α) of the air deflector (2) relative to a vehicle roof (3) on which the air deflector (2) is arranged, the nut (14) arranged on the shaft (11) can move along the shaft (11) when the shaft (11) is rotating, and at least one connecting rod (15), which is joined in an articulated manner to the nut (14) and to the air deflector (2), transmits movement and power from the nut (14) to the air deflector (2) when the angle (α) of the air deflector (2) relative to the vehicle roof (3) is to be adjusted, **characterized in that** the shaft (11) and the nut (14) are arranged in a housing (21) which, with a support (22), is connected to the vehicle roof (3) and that the shaft (11) extends at an angle (β) of between 20 - 50 degrees relative to the roof (3).

2. Adjusting device according to claim 1, **characterized in that** the connecting rod (15) is essentially V-shaped and via its outer ends (16) is joined in an articulated manner to the air deflector (2) and via a central area (17) is joined in an articulated manner to the nut (14).

3. Adjusting device according to claim 1 or 2, **characterized in that** a transmitter (30) is arranged on the nut (14) and a sensor (31) is arranged on the housing (21), which sensor (31) detects the position of the nut (14) on the shaft (11) and thus the position of the air deflector (2) relative to the vehicle roof (3).

4. Adjusting device according to Claim 3, **characterized in that** the transmitter (30) is a permanent magnet arranged on the nut (14), and **in that** the sensor (31) comprises a plurality of magnetic tongue elements which are arranged at predetermined distances along the longitudinal direction of the shaft (11).

5. Adjusting device according to one of the preceding claims, **characterized in that** at least one pneumatic spring (20) is connected between the vehicle roof (3) and the air deflector (2).

## Patentansprüche

1. Einstellvorrichtung für einen Windabweiser (2), mit einer Welle (11), die mit einem Schraubengewinde (12) versehen ist, und einer auf der Welle (11) angeordneten Mutter (14), wobei die Welle (11) mit einem Antriebsmechanismus (13) gekoppelt ist, der eine Drehung der Welle (11) ermöglicht, wenn der Winkel (α) des Windabweisers (2) bezüglich eines Fahrzeugdaches (3), auf dem der Windabweiser (2) angeordnet ist, eingestellt wird, wobei die auf der Welle (11) angeordnete Mutter (14) sich entlang der Welle (11) bewegen kann, wenn die Welle (11) gedreht wird, und wobei wenigstens eine Verbindungsstange (15), die mit der Mutter (14) und dem Windabweiser (2) gelenkig verbunden ist, eine Bewegung und eine Kraft von der Mutter (14) auf den Windabweiser (2) überträgt, wenn der Winkel (α) des Windabweisers (2) bezüglich des Fahrzeugdaches (3) eingestellt werden soll, **dadurch gekennzeichnet, dass** die Welle (11) und die Mutter (14) in einem Gehäuse (21) angeordnet sind, das mit einem Träger (22) mit dem Fahrzeugdach (3) verbunden ist, und dass sich die Welle (11) in einem Winkel (β) zwischen 20 bis 50 Grad bezüglich des Daches (3) erstreckt.

2. Einstellvorrichtung nach Anspruch 1, **dadurch gekennzeichnet, dass** die Verbindungsstange (15) im Wesentlichen V-förmig ist und über ihre äußeren Enden (16) gelenkig mit dem Windabweiser (2) verbunden ist und über einen Mittelbereich (17) gelenkig mit der Mutter (14) verbunden ist.

3. Einstellvorrichtung nach Anspruch 1 oder 2, **dadurch gekennzeichnet, dass** ein Transmitter (30) auf der Mutter (14) angeordnet ist und ein Sensor (31) auf dem Gehäuse (21) angeordnet ist, wobei der Sensor (31) die Position der Mutter (14) auf der Welle (11) und somit die Position des Windabweisers (2) bezüglich des Fahrzeugdaches (3) erfasst.

4. Einstellvorrichtung nach Anspruch 3, **dadurch gekennzeichnet, dass** der Transmitter (30) ein auf der Mutter (14) angeordneter Permanentmagnet ist, und dass der Sensor (31) eine Vielzahl von Magnetzungenelementen umfasst, die in vorherbestimmten Abständen entlang der Längsrichtung der Welle (11) angeordnet sind.

5. Einstellvorrichtung nach einem der vorhergehenden Ansprüche, **dadurch gekennzeichnet, dass** wenigstens eine pneumatische Feder (20) zwischen das Fahrzeugdach (3) und den Windabweiser (2) gekoppelt ist.

## Revendications

1. Dispositif d'ajustement pour un déflecteur d'air (2), comportant un arbre (11), qui est muni d'un filetage (12), et un écrou (14) agencé sur l'arbre (11), dans lequel l'arbre (11) est couplé à un mécanisme d'entraînement (13) qui permet la rotation de l'arbre (11) lors de l'ajustement de l'angle (α) du déflecteur d'air (2) par rapport à un toit de véhicule (3) sur lequel le déflecteur (2) est agencé, l'écrou (14) agencé sur l'arbre (11) peut se déplacer le long de l'arbre (11) lorsque l'arbre (11) tourne, et au moins une tige de connexion (15), qui est reliée d'une manière articulée à l'écrou (14) et au déflecteur d'air (2), transmet un déplacement et de la puissance à partir de l'écrou (14) vers le déflecteur d'air (2) lorsque l'angle (α) du déflecteur d'air (2) par rapport au toit de véhicule (3) doit être ajusté, **caractérisé en ce que** l'arbre (11) et l'écrou (14) sont agencés dans un boîtier (21) qui, avec un support (22), est relié au toit de véhicule (3), et **en ce que** l'arbre (11) s'étend sur un angle (β) compris entre 20 et 50 degrés par rapport au toit (3).

2. Dispositif d'ajustement selon la revendication 1, **caractérisé en ce que** la tige de connexion (15) est essentiellement en forme de V, et via ses extrémités extérieures (16), est reliée d'une manière articulée au déflecteur d'air (2), et via une zone centrale (17), est reliée d'une manière articulée à l'écrou (14).

3. Dispositif d'ajustement selon la revendication 1 ou 2, **caractérisé en ce qu'**un émetteur (30) est agencé sur l'écrou (14), et un capteur (31) est agencé sur le boîtier (21), lequel capteur (31) détecte la position de l'écrou (14) sur l'arbre (11), et ainsi la position du déflecteur d'air (2) par rapport au toit de véhicule (3).

4. Dispositif d'ajustement selon la revendication 3, **caractérisé en ce que** l'émetteur (30) est un aimant permanent agencé sur l'écrou (14), et **en ce que** le capteur (31) comprend une pluralité d'éléments formant languette magnétiques qui sont agencés à des distances prédéterminées le long de la direction longitudinale de l'arbre (11).

5. Dispositif d'ajustement selon l'une quelconque des revendications précédentes, **caractérisé en ce qu'**au moins un ressort pneumatique (20) est connecté entre le toit de véhicule (3) et le déflecteur d'air (2).
